Europäisches Patentamt

European Patent Office

Office européen des brevets

(11) Veröffentlichungsnummer: **0 411 558 A1**

## (12) EUROPÄISCHE PATENTANMELDUNG

(21) Anmeldenummer: **90114664.7**

(22) Anmeldetag: **31.07.90**

(51) Int. Cl.5: **B60K 41/10**

(30) Priorität: **02.08.89 DE 3925524**

(43) Veröffentlichungstag der Anmeldung:
**06.02.91 Patentblatt 91/06**

(84) Benannte Vertragsstaaten:
**AT DE FR IT**

(71) Anmelder: **Xaver Fendt & Co.Co.**
**Johann-Georg-Fendt-Strasse 4**
**D-8952 Marktoberdorf(DE)**

(72) Erfinder: **Reisch, Johann**
**Saliterstrasse 90**
**D-8952 Marktoberdorf(DE)**

(54) Steuerung für ein Stufengetriebe eines Kraftfahrzeuges.

(57) Derzeitige Umschaltsteuerungen für lastschaltbare Stufengetriebe in Kraftfahrzeugen, bei denen Kupplungen sich zeitlich überschneidend gelöst bzw. geschlossen werden, arbeiten im Hinblick auf eine gewünschte Ruckfreiheit nicht zufriedenstellend. Zwar ist es möglich, die Überschneidung der Kupplungen so zu optimieren, daß beim Wechsel einer bestimmten Getriebestufe kein wesentlicher Schaltruck auftritt. Dies gilt aber nicht für alle gegebenen Schaltstufen eines vielstufigen Getriebes.

Um unter allen Einsatzbedingungen bei kurzen Schaltzeiten ein weiches Umschalten zu gewährleisten wird u.a. vorgeschlagen, daß in einem Speicher einer das Umschalten bewirkenden Steuereinrichtung (12) Zeiten (t) für den Öffnungsbeginn der zu öffnenden Kupplung in Abhängigkeit vom Fahrmoment (MF) abgespeichert sind, die sich im Hinblick auf den im jeweiligen Fahrzustand des Fahrzeuges akzeptierten Schaltruck als optimal herausgestellt haben.

Fig.1

## STEUERUNG FÜR EIN STUFENGETRIEBE EINES KRAFTFAHRZEUGES

Die Erfindung betrifft eine Steuerung für eine ohne Zugkraftunterbrechung schaltbares Stufengetriebe eines von einem Antriebsmotor angetriebenen Kraftfahrzeuges, bei dem zum Umschalten reibschlüssige Elemente, wie z.B. Kupplungen, sich zeitlich überschneidend gelöst bzw. geschlossen werden und der Zeitpunkt des Lösebeginns der auszurückenden Kupplung zwecks Verminderung des Schaltruckes in Abhängigkeit von einer Betriebsgröße des Fahrzeugantriebes verändert wird.

Eine Steuerung der beschriebenen Art ist im Zusammenhang mit dem für Ackerschlepper bestimmten Lastschaltgetriebe T 6500 mit acht lastschaltbaren Stufen und einem zweistufigen Gruppengetriebe der Fa. ZF, Friedrichshafen, bekannt geworden. Ausgehend von der Erfahrung, daß ein im Hinblick auf den beim Pflügen zu erwartenden Schaltruck optimal ausgelegtes Stufengetriebe bei Transportfahrten einen erheblichen Schaltruck auslöst, erfolgt bei dem bekannten Getriebe die Ansteuerung der auszurückenden Kupplung in Bezug auf den Zeitpunkt, in dem die einzurückende Kupplung angesteuert wird je nachdem, ob in dem den Fahrzeugantrieb mitbildenden Gruppengetriebe die Schaltstufe für schnelle Transportfahrten oder die Schaltstufe für langsame Arbeitsgeschwindigkeiten eingestellt ist, zu einem unterschiedlichen Zeitpunkt. Dabei liegt dieser in der Betriebsart "Transportfahrt" erheblich früher als dies in der Betriebsart "Pflügen" der Fall ist.

Nachteilig an der bekannten Steuerung ist, dar nicht nur wegen der sehr geringen Anzahl der Stufen des Gruppengetriebes keine den Wünschen der Fahrzeugbenutzer gerechtwerdende Anpassung des Ansteuerzeitpunktes der auszurückenden Kupplung an den jeweils gegebenen Einsatzzustand des Fahrzeuges möglich ist. Eine derartige Feinanpassung ist auch deshalb unmöglich, weil beim Umschalten die zum Schaltruck führende Verspannung des Schaltgetriebes gerade bei langsamen Arbeitsfahrten mit einem vom Antriebsmotors des Fahrzeuges angetriebenen Arbeitsgerät unterschiedlich ausfallen kann, je nachdem, wie hoch der jeweilige Anteil der Fahrleistung an der gesamten Motorleistung ist.

Hiervon ausgehend besteht die Aufgabe der Erfindung darin, eine Steuerung für lastschaltbare Stufengetriebe der eingangs erläuterten Art zu schaffen, die unter allen Einsatzbedingungen des Fahrzeuges und bei kurzen Umschaltzeiten ein sehr weiches Umschalten möglich macht.

Gelöst wird diese Aufgabe dadurch, daß beim Umschalten des Lastschaltgetriebes der Aufbau des vollen Drehmomentübertragungsvermögens der jeweils schließenden Kupplung langsamer erfolgt als der Abbau des vollen Drehmomentübertragungsvermögens der jeweils öffnenden Kupplung, daß der Öffnungsbeginn der jeweils öffnenden Kupplung in Bezug auf den Schließbeginn der zu schließenden Kupplung in Abhängigkeit von dem unmittelbar vor dem Umschalten von der geschlossenen Kupplung übertragenen Fahrmoment bestimmt wird, derart, daß die Kupplung mit zunehmendem Fahrmoment später beginnt zu öffnen, und

daß in einem Speicher einer das Umschalten bewirkenden Steuereinrichtung Zeiten für den Öffnungsbeginn der Kupplung in Abhängigkeit vom Fahrmoment abgespeichert sind, die sich im Hinblick auf den im jeweiligen Fahrzustand des Fahrzeuges akzeptierten Schaltruck als optimal herausgestellt haben.

Nachdem durch die Erfindung der Schaltruck in praktisch allen Betriebssituationen beherrschbar ist, stellt sich nicht nur eine wesentliche Verbesserung des Fahrkomforts ein, sondern wird auch die Beanspruchung praktisch aller Bauelemente des Fahrzeugantriebes deutlich herabgesetzt. Hieraus resultiert eine allgemeine Verringerung der Abmessungen vieler Bauteile und somit hinsichtlich der bereits seit langem bestehenden Unterbringungsschwierigkeiten dieser Bauteile eine deutliche Entspannung.

In einer Ausgestaltung der Erfindung sind bei einem Fahrzeug mit einer Turbokupplung im Leistungsfluß zwischen dem Antriebsmotor und dem Stufengetriebe Betriebsdaten der Turbokupplung bei der Ermittlung des Fahrmomentes mit einbezogen.

Im folgenden wird ein Ausführungsbeispiel der Erfindung anhand einer Zeichnung näher erläutert. Es zeigt:

Fig. 1 Die schematische Wiedergabe eines Fahrzeugantriebes mit Lastschaltgetriebe und der zugehörigen Steuereinrichtung und

Fig. 2 ein Schaubild, in dem die von den Kupplungen des Lastschaltgetriebes während des Umschaltens übertragbaren Drehmomente über die Zeit aufgetragen sind.

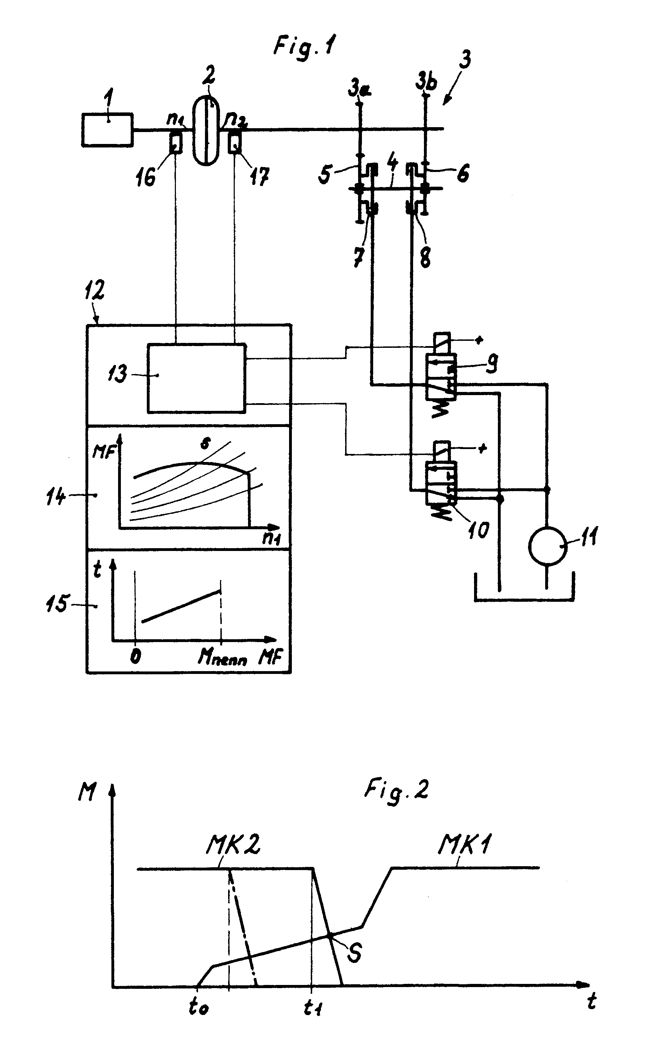

Bei dem in Fig. 1 gezeigten Fahrzeugantrieb ist im Kraftfluß von einem Antriebsmotor 1 zu den angetriebenen Rädern eine Turbokupplung 2 und ein Lastschaltgetriebe 3 angeordnet. Obgleich das Lastschaltgetriebe 3 in der Realität eine Vielzahl Getriebestufen aufweist, zeigt das abgebildete lediglich zwei Getriebestufen 3a, 3b, die je nach Bedarf in den Kraftfluß einschaltbar sind. Hierzu sind auf der Ausgangswelle 4 des Lastschaltgetriebes 3 die getriebenen Zahnräder 5,6 der Getriebestufen 3a, 3b als Losräder drehbar gelagert. Jeder Getriebestufe 3a, 3b ist eine Reibungslamellenkupplung 7,8 zugeordnet, die in angesteuertem Zustand die getriebenen Zahnräder 5,6 kraftschlüssig mit der Ausgangswelle 4 verbinden.

Die Reibungskupplungen 7,8 des Ausführungsbeispiels sind hydraulisch betätigbar, weshalb ihre Betätigungszylinder über je ein elektrisch ansteuerbares 3/2 - Wegeventil 9,10 an die durch die Pumpe 11 dargestellte Hydraulikanlage des Fahrzeuges angeschlossen sind.

Zur funktionsgerechten Ansteuerung der Wegeventile 9,10 dient eine elektronische Steuereinrichtung 12. Diese hat zum einen sicherzustellen, daß die beiden auf der Ausgangswelle 4 des Lastschaltgetriebes 3 angeordneten Kupplungen 7,8 nicht gleichzeitig vollständig eingerückt werden. Zum anderen muß die Steuereinrichtung 12 anläßlich einer Umschaltung des Lastschaltgetriebes 3 von der einen in die andere Getriebestufe die einzurückende und die auszurückende Kupplung in der Weise ansteuern, daß weder Zugkraftunterbrechungen noch unnötig hohe Blockierungen des Lastschaltgetriebes 3 mit entsprechend harten Schaltrücken auftreten. Um diese Aufgabe zu erfüllen, verfügt die Steuereinrichtung 12 über einen zentralen Prozessor 13, einen Speicher 14 für ein Kennlinienfeld der Turbokupplung 2 und einen Speicher 15 für den erforderlichen Ansteuerzeitpunkt t der jeweils auszurückenden Kupplung 7,8 des Lastschaltgetriebes 3. Der Inhalt des Speichers 15 ermöglicht daher die automatische Feststellung eines Zeitpunktes t1, in dem im Zuge eines Umschaltens des Lastschaltgetriebes 3 von der einen in die andere Getriebestufe die auszurückende Kupplung angesteuert werden muß, damit der Schaltruck unter allen Einsatzbedingungen des Fahrzeuges möglichst weich ausfällt.

Erfindungsgemäß wird dieser Zeitpunkt t1 abhängig gemacht von dem unmittelbar vor dem Umschalten des Lastschaltgetriebes 3 von der geschlossenen Kupplung 7 oder 8 übertragenen Fahrmoment MF. Damit einem beliebigen Fahrmoment MF ein im Hinblick auf den gewünschten Effekt passender Schaltzeitpunkt t1 zugeordnet werden kann, werden diese in umfangreichen Versuchsfahrten empirisch ermittelt.

Das Fahrmoment MF selbst übernimmt der Prozessor 13 aus dem im Speicher 14 befindlichen Kennlinienfeld der Turbokupplung 2, das in z.B. aus der DE-OS 31 22 362 bekannter Weise das augenblicklich übertragene Fahrdrehmoment MF in Abhängigkeit von der Eingangsdrehzahl n1 für unterschiedlichen Kupplungsschlupf s wiedergibt. Dabei benutzt er die ständig mittels der Drehzahlsensoren 16,17 ermittelten Eingangs- n1 und Ausgangsdrehzahlen n2 der Turbokupplung 2 zur Berechnung des Kupplungsschlupfes s nach der Beziehung n1-n2/n1.

Nach Eingang eines Umschaltsignals für das Lastschaltgetriebe 3 bestimmt der Prozessor 13 in der angegebenen Weise den Schlupf s der Turbokupplung 2 und entnimmt aus dem Speicher 14 das momentane Fahrmoment MF. Dieses wiederum wird benutzt, um aus dem Speicher 15 den Zeitpunkt t1 zu entnehmen, der angibt, welche Zeitspanne nach dem einen Steuerventil 9,10 für die zu schließende Kupplung 7,8 das andere Steuerventil 10,9 für die zu öffnende Kupplung 8,7 angesteuert werden muß.

Der Ablauf des Umschaltvorganges, insbesondere der Verlauf des Drehmomentübertragungsvermögens der beiden Kupplungen 7,8 geht aus dem Schaubild gemäß Fig. 2 hervor. In dem Schaubild ist der im Zuge eines Umschaltvorganges zu schließenden Kupplung - es kann dies die Kupplung 7 oder 8 sein - eine Kennlinie MK1 zugeordnet, die den Verlauf des von dieser Kupplung übertragenen Drehmoments M wiedergibt. Ab dem Zeitpunkt to, in dem die Steuereinrichtung 12 das entsprechende Steuerventil 7,8 umschaltet, steigt das Drehmoment gemäß der Kennlinie zunächst verhältnismäßig langsam, dann schneller an, um schließlich im Zeitpunkt te das maximal übertragbare Fahrmoment MFmax zu erreichen. Der im Zuge des Umschaltvorganges zu öffnenden Kupplung ist eine Kennlinie MK2 zugeordnet, die den Verlauf des von dieser Kupplung übertragenen Drehmoments zeigt. Bis zum Zeitpunkt t1, in dem die Steuereinrichtung 12 das zugeordnete andere Steuerventil 8,7 umschaltet, besitzt diese Kupplung ihr volles Übertragungsvermögen. Dieses fällt anschließend in Vergleich zum Anstieg der Kennlinie MK1 verhältnismäßig schnell, d.h. innerhalb von z.B. 0,2 sec., auf Null ab.

Am Beispiel zweier beliebiger Arbeitseinsätze des Fahrzeuges soll nun der Umschaltvorgang näher beschrieben werden.

Es sei angenommen, daß anläßlich der Durchführung von Pflugarbeiten das von der Turbokupplung 2 übertragene Fahrmoment MF an der oberen Grenze des übertragbaren Momentenbereiches liegt, wenn das Lastschaltgetriebe 3 aus der langsamen Getriebestufe 3a in die schnelle Getriebestufe 3b umgeschaltet werden soll. Der Speicher 15 weist für dieses Fahrmoment MF die längste Zeitdauer t1 aus. Dementsprechend spät wird im Vergleich zur bei to schließenden Kupplung 8 die andere Kupplung 7 bei t1 geöffnet.

Infolgedessen steht der Kupplung 8 eine verhältnismäßig lange Zeit zur Verfügung, um am Schnittpunkt 5 der ausgezogenen MK1-und MK2-Kennlinien einen bereits hohen Anteil am Fahrmoment MF zu übernehmen. Entsprechend schwach fällt der Schaltruck anläßlich der unmittelbar daran anschließenden vollständigen Übernahme des Fahrmoments durch die Kupplung 8 aus.

In einem weiteren Einsatzfall sein angenommen, daß beim Hochschalten des Lastschaltgetriebes 3 während einer Transportfahrt das von der TK2 übertragene Fahrmoment MF an der unteren Grenze des übertragbaren Momentenbereiches liegt. In diesem Fall weist der Speicher 15 für dieses geringe Fahrmoment MF eine sehr kurze Zeitdauer t2 aus, so daß die Kupplung 7 nur kurz nach der Kupplung 8 im Sinne eines Öffnens betätigt wird. Nun steht zur Übernahme des geringen Fahrmoments MF durch die Kupplung 8 eine etwa in gleichem Ausmaß verringerte Zeit zur Verfügung, so daß in beiden beschriebenen Extremfällen, sofern dies der empirischen Ermittlung der Zeitdauer t zugrundegelegt wurde, der Schaltdruck konstant bleibt.

Sofern dies bereits bei der empirischen Ermittlung der Zeit t berücksichtigt wurde, kann aber der Schaltdruck je nach Einsatzbedingung des Fahrzeuges auch in unterschiedlicher Härte ausfallen.

## Ansprüche

1. Steuerung für ein ohne Zugkraftunterbrechung schaltbares Stufengetriebe eines von einem Antriebsmotor angetriebenen Kraftfahrzeuges, bei dem zum Umschalten reibschlüssige Elemente, wie z.B. Kupplungen, sich zeitlich überschneidend gelöst bzw. geschlossen werden und der Zeitpunkt (t) des Lösebeginns der auszurückenden Kupplung zwecks Verminderung des Schaltruckes in Abhängigkeit von einer Betriebsgröße des Fahrzeugantriebes verändert wird,
**dadurch gekennzeichnet,**
daß beim Umschalten des Stufengetriebes (3) der Aufbau des vollen Drehmomentübertragungsvermögens der jeweils schließenden Kupplung langsamer erfolgt als der Abbau des vollen Drehmomentübertragungsvermögens der jeweils öffnenden Kupplung,
daß der Öffnungsbeginn der öffnenden Kupplung in Bezug auf den Schließbeginn der schließenden Kupplung in Abhängigkeit von dem unmittelbar vor dem Umschalten von der geschlossenen Kupplung übertragenen Fahrmoment (MF) bestimmt wird, derart, daß die zu öffnende Kupplung mit zunehmendem Fahrmoment (MF) später beginnt zu öffnen, und
daß in einem Speicher einer das Umschalten bewirkenden Steuereinrichtung (12) Zeiten (t) für den Öffnungsbeginn der zu öffnenden Kupplung in Abhängigkeit vom Fahrmoment (MF) abgespeichert sind, die sich im Hinblick auf den im jeweiligen Fahrzustand des Fahrzeuges akzeptierten Schaltruck als optimal herausgestellt haben.

2. Steuerung nach Anspruch 1, für ein Fahrzeug mit einer Turbokupplung im Leistungsfluß zwischen dem Antriebsmotor und dem Stufengetriebe, **gekennzeichnet durch** die Einbeziehung von Betriebsdaten der Turbokupplung (2) bei der Ermittlung des Fahrmomentes (MF).

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 339 880 (ROBERT BOSCH) * Zusammenfassung * -- | 1 | B 60 K 41/10 |
| A | DE - A1 - 3 140 259 (FAG KUGELFISCHER) * Gesamt * -- | 1 | |
| A | US - A - 4 073 204 (DICK) * Gesamt * -- | 1 | |
| A | EP - A1 - 0 235 892 (GENERAL MOTORS) * Zusammenfassung * -- | 1 | |
| A | US - A - 4 665 774 (OGURI) * Gesamt * -- | 1 | |
| A | US - A - 4 532 829 (SUGANO) * Zusammenfassung * -- | 1 | RECHERCHIERTE SACHGEBIETE (Int Cl⁵) |
| D,A | DE - A1 - 3 122 362 (XAVER FENDT) * Gesamt * ---- | 2 | B 60 K G 01 M |

Der vorliegende Recherchenbericht wurde für alle Patentansprüche erstellt.

| Recherchenort | Abschlußdatum der Recherche | Prüfer |
|---|---|---|
| WIEN | 13-11-1990 | HENGL |